# EUROPÄISCHE PATENTSCHRIFT

(11) **EP 1 241 124 B1**
(45) Veröffentlichungstag und Bekanntmachung des Hinweises auf die Patenterteilung: **02.11.2005**
(21) Anmeldenummer: 02005570.3
(22) Anmeldetag: 12.03.2002
(51) Int. Cl.: B65H 75/44, B66C 23/90, G01B 7/02

(54) **Zwangsführung bei einem Seillängengeber**
Forced guiding in a cable winding and unwinding device
Guidage forcé dans un dispositif enrouleur-dérouleur de cable

(30) Priorität: 16.03.2001 DE 10114142
(43) Veröffentlichungstag der Anmeldung: 18.09.2002
(73) Patentinhaber: Fernsteuergeräte Kurt Oelsch GmbH, 12347 Berlin-Britz (DE)
(72) Erfinder: Schulz, Klaus-Dieter, 12349 Berlin (DE)
(74) Vertreter: Weisse, Jürgen

(56) Entgegenhaltungen:
- EP-A- 1 014 031
- DE-A- 2 713 592
- DE-U- 29 519 809
- DE-U- 29 803 061
- US-A- 1 747 411
- US-A- 2 132 548
- US-A- 2 133 551

## Beschreibung

### Technisches Gebiet

Die Erfindung betrifft eine Zwangsführung nach dem Oberbegriff des Anspruchs 1.

### Zugrundeliegender Stand der Technik

Seillängengeber sind an sich bekannt und werden beispielsweise bei Teleskopauslegern verwendet.

Ein bekannter Seillängengeber ist in DE 295 19 611 U 1 offenbart. Dieser Seillängengeber weist eine in einem Gehäuse drehbar gelagerte Seiltrommel auf, auf welche ein Seil aufwickelbar ist. Weiterhin ist ein Federantrieb vorgesehen, der sich an dem Gehäuse abstützt und ein Rückdrehmoment auf die Seiltrommel ausübt. Ein Längenaufnehmer ist in dem Gehäuse gehaltert und über ein Untersetzungsgetriebe mit einer Seiltrommelwelle gekuppelt. In dem Gehäuse ist ein axialer Schlitz vorgesehen, durch welchen das von der Seiltrommel abzuziehende Seil hindurchgeführt ist. Eine Führung des Seils außerhalb der Seiltrommel selbst ist nicht vorgesehen.

Beim Vorhandensein einer Führung des Seils außerhalb der Seiltrommel erfolgt die Führung des Seils bei bekannten Seillängengeber entweder über einen mit einem Gehäuse des Seillängengebers fest verbundenen Seilausgang oder über eine Zwangsführung mit einem in Axialrichtung der Seiltrommelwelle beweglichen Seilführungskörper.

Seillängengeber mit einem gehäusefesten Seilausgang sind in DE 199 25 364 A1, DE 199 39 223 C1, DE 295 19 809 U1 und DE 297 07 253 U1 offenbart. Bei diesen Seillängengebem besteht die Gefahr, daß das Seil schräg durch den Seilausgang verläuft, wodurch verschiedene Probleme auftreten können. Diese Gefahr wird beispielsweise in der DE 295 19 809 U1 und DE 297 07 253 U1 durch ein Stellgetriebe behoben, über welches die Seiltrommel nach Maßgabe ihrer Umdrehungen derart in Axialrichtung in dem Gehäuse verstellbar ist, daß sich die von der Seiltrommel jeweils abgewickelten oder aufgewickelten Windungen des Meßseils im wesentlichen in der Ebene des Seilausgangs befinden. Eine solche Konstruktion ist oft sehr aufwendig.

Seillängengeber mit einer Zwangsführung mit einem in Axialrichtung der Seiltrommelwelle beweglichen Seilführungskörper sind in DE 88 01 109 U1 und DE 298 03 061 U1 offenbart. In der DE 88 01 109 U1 wird der Seilführungskörper in nicht näher angegebener Weise in einer Traverse des Gehäuses des Seillängengebers geführt.

In der DE 298 03 061 U1 wird ein Seillängengeber offenbart, welcher eine Zwangsführung mit einem Seilführungskörper aufweist, welcher in Abhängigkeit von der Drehung der Seiltrommel parallel zu der Axialrichtung der Seiltrommelwelle bewegbar ist. Der Seilführungskörper ist an einer Führungsstange längsverschiebbar geführt. Die Führungsstange ist in Querschnitt rund. Der Seilführungskörper wird von einer Rolle gebildet, welche eine Umfangsnut und zwei Umfangsvorsprünge aufweist. In der Umfangsnut wird das Seil geführt. Die Umfangsvorsprünge greifen in die spiralförmig verlaufende Umfangsnut der Mantelfläche des Seilaufnahmeteils der Seiltrommel. Durch die Drehung der Seiltrommel wird der Seilführungskörper in der spiralförmig verlaufenden Umfangsnut geführt und entlang der Führungsstange so verschoben, daß die Umfangsnut des Seilführungskörpers der spiralförmigen Umfangsnut immer an der Stelle gegenüberliegt, an welcher das Seil die Seiltrommel verläßt. Dabei kann sich der Seilführungskörper frei an der Führungsstange drehen. Bei dieser Zwangsführung erfolgt also die Übertragung der Bewegung zwischen Seiltrommel und Seilführungskörper über die spiralförmig verlaufende Umfangsnut der Mantelfläche des Seilaufnahmeteils der Seiltrommel und die zwei Umfangsvorsprünge des Seilführungskörpers.

Durch die US-A-1 747 411 ist eine Kabeltrommel für ein elektrisches Kabel offenbart. Die Kabeltrommel weist eine Kabeltrommelwelle auf. Um die Achse der Kabeltrommelwelle ist ein Kabelaufnahmeteil drehbar gelagert, auf welchen ein Kabel auf- und abwickelbar ist. Die Kabeltrommel weist eine Zwangsführung mit einem Kabelführungskörper auf, welcher in Abhängigkeit von der Drehung der Kabeltrommel parallel zur Axialrichtung der Kabeltrommelwelle bewegbar ist. Es sind Übertragungsmittel zum Umsetzen der Drehbewegung der Kabeltrommel in eine Linearbewegung des Kabelführungskörpers vorgesehen. Diese Übertragungsmittel bestehen aus einem mit der Kabeltrommelwelle verbundenen Zahnrad, einer mit dem Kabelführungskörper in Wirkverbindung stehenden Spindel und einem Zahnriemenantrieb.

### Offenbarung der Erfindung

Der Erfindung liegt die Aufgabe zugrunde, eine Zwangsführung der eingangs genannten Art zu schaffen, welche mit einfachen Mitteln aufgebaut ist.

Der Erfindung liegt weiterhin die Aufgabe zugrunde, eine Zwangsführung der eingangs genannten Art zu schaffen, welche mit einfachen Mittel nachträglich an bestehenden Seillängengebern anbringbar ist.

Erfindungsgemäß wird diese Aufgabe durch die im kennzeichnenden Teil des Anspruchs 1 gelöst.

Im Gegensatz zu der in DE 298 03 061 U 1 offenbarte Zwangsführung sind also bei der vorliegenden Erfindung die Übertragungsmittel zum Umsetzen der Drehbewegung der Seiltrommel in eine Linearbewegung des Seilführungskörpers nicht Teil der Seiltrommel selbst, sondern bilden eine separate Einheit. Dadurch können auch bestehende Seillängengeber mit dieser Zwangsführung nachgerüstet werden, indem der Träger des Seilführungskörpers lösbar mit dem Gehäuse des Seillängengebers verbindbar ist.

Die Übertragungsmittel weisen eine mit dem Seilführungskörper in Wirkverbindung stehende Spindel aufweisen, welche von der Bewegung der Seiltrommel antreibbar ist. Dabei wird der Seilführungskörper von der Spindel in Axialrichtung bewegt, wenn die Spindel rotiert. Zum Drehen der Spindel sind weitere Übertragungsglieder vorgesehen, nämlich ein mit der Seiltrommelwelle verbindbares, erstes Zahnrad, ein in dem Träger vorgesehenes, zweites Zahnrad und einen zwischen dem zweiten Zahnrad und der Spindel wirkenden Zahnriemenantrieb.

Bei Nachrüsten eines bestehenden Seillängengebers mit der erfindungsgemäßen Zwangsführung wird das erste Zahnrad mit der Seiltrommelwelle fest verbunden. Der Träger wird dann an dem Gehäuse des Seillängengebers so befestigt, daß das zweite Zahnrad in Eingriff mit dem ersten Zahnrad steht.

Wenn das Seil in mehreren Lagen auf die Seiltrommel aufgewickelt ist, muß dafür gesorgt werden, daß die Bewegungsrichtung des Seilführungskörpers umgekehrt wird, wenn sich der Ab- bzw. Aufwickelpunkt des Seils an der Seiltrommel an einem Ende der Seiltrommel befindet. Dies kann beispielsweise durch Verwenden einer Kreuzspindel erreicht werden. Eine Kreuzspindel ist mit zwei Gewinden versehen, wobei die Steigungen der Gewinde in entgegengesetzten Richtungen verlaufen und so bei gleicher Drehrichtung der Spindel den Seilführungskörper in zwei entgegengesetzte Richtungen bewegt.

Es sei erwähnt, daß das hier erwähnte Gehäuse des Seillängengebers sowohl ein geschlossenes als auch ein offenes Gehäuse sein kann.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert.

### Kurze Beschreibung der Zeichnungen

- Fig. 1: zeigt ein Ausführungsbeispiel einer an einem Gehäuse eines Seillängengebers angebrachten Zwangsführung für das Seil, teilweise im Schnitt.
- Fig. 2: zeigt eine Seitenansicht des oberen Teils der Zwangsführung von Fig. 1.

### Bevorzugte Ausführung der Erfindung

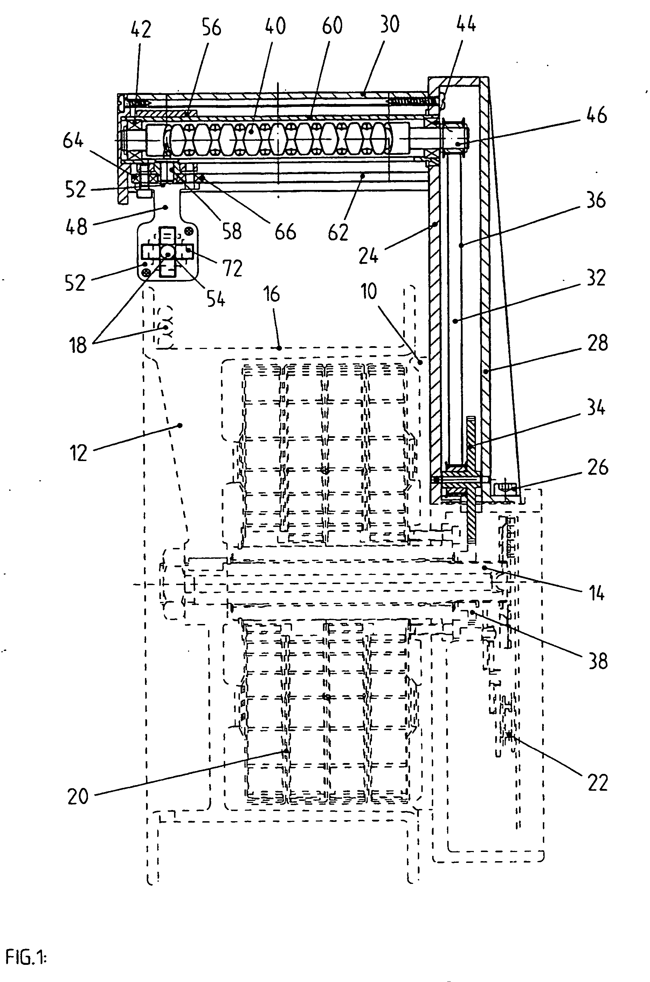

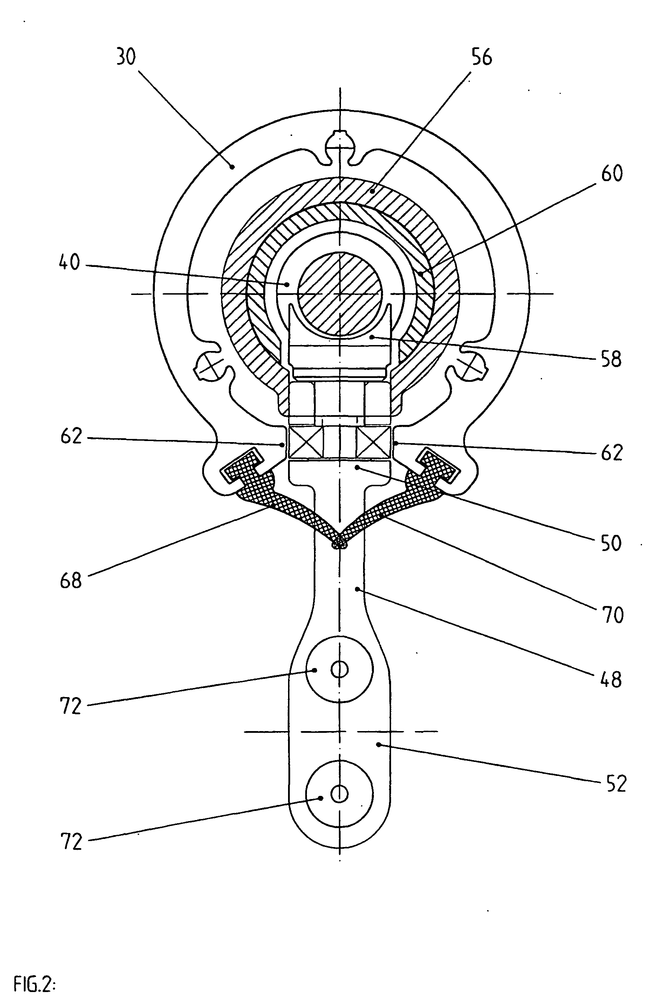

In Fig. 1 und 2 ist ein Seillängengeber mit einer Zwangsführung dargestellt. Dabei bildet die Zwangsführung eine getrennte Einheit, welche mit einem bekannten Seillängengeber verwendbar ist.

Mit gestrichelten Linien ist ein bekannter Seillängengeber angedeutet. Dieser Seillängengeber enthält eine in einem Gehäuse 10 drehbar gelagerte Seiltrommel 12. Die Seiltrommel 12 ist mit einer Seiltrommelwelle 14 in Lagern gelagert. An der Mantelfläche der Seiltrommel befindet sich eine Seilaufnahme 16 für ein Seil 18. In Fig. 1 ist durch drei Kreise angedeutet, daß das Seil in mehreren Lagen auf die Seiltrommel 12 aufwickelbar ist. Ein Federantrieb 20 stützt sich an dem Gehäuse 10 ab und greift an der Seiltrommel 12 an. Mit 22 ist eine mit der Seiltrommelwelle 14 verbundene Meßwertgeberanordnung bezeichnet. Ein so aufgebauter Seillängengeber ist beispielsweise aus DE 295 19 611 U1 bekannt wird hier nicht im einzelnen beschreiben.

An dem Gehäuse 10 des Seillängengebers ist ein Zwangsführungsträger 24 in Form eines Zwangsführungsgehäuses mittels Schrauben 26 befestigt. Das Zwangsführungsgehäuse 24 besteht aus zwei miteinander verbundenen Gehäuseteilen 28 und 30. Das erste Gehäuseteil 28 ist langgestreckt ausgebildet, erstreckt sich senkrecht zu der Seiltrommelwelle 14 und ist mit einem ersten Ende an dem Gehäuse 10 des Seillängengebers befestigt. Das zweite Gehäuseteil 30 ist ebenfalls langgestreckt ausgebildet, erstreckt sich parallel zu der Seiltrommelwelle 14 und ist mit einem ersten Ende an dem ersten Gehäuseteil 28 in der Nähe des zweiten Endes befestigt. In dem hier dargestellten Ausführungsbeispiel ist das zweite Gehäuseteil als Strangpreßprofil ausgebildet.

In dem ersten Gehäuseteil 28 befindet sich ein Zahnriemenantrieb 32. Der Zahnriemenantrieb 32 weist ein in dem Gehäuseteil 28 drehbar gelagertes Zahnrad 34 sowie einen Antriebsriemen 36 auf. Im montierten Zustand, d.h. wenn die Zwangsführung an dem Gehäuse 10 des Seillängengebers angebracht ist, befindet sich das Zahnrad 34 in Eingriff mit einem an der Seiltrommelwelle 14 vorgesehenen Zahnrad 38.

In dem zweiten Gehäuseteil 30 befindet sich eine Kreuzspindel 40. Die Kreuzspindel 40 verläuft in Längsrichtung des zweiten Gehäuseteils 30 und somit parallel zu der Seiltrommelwelle 14 und ist in dem zweiten Gehäuseteil 30 in Lagern 42 und 44 drehbar gelagert. Die Kreuzspindel 40 erstreckt sich mit einem Ende 46 in das erste Gehäuseteil 28 hinein und ist dort mit dem Antriebsriemen 36 in Wirkverbindung.

An dem als zweites Gehäuseteil 30 ausgebildeten Querträger der Zwangsführung ist ein Seilführungskörper 48 angeordnet. Der Seilführungskörper 48 weist ein Führungsteil 50 und ein Seilaufnahmeteil 52 auf. Mit dem Führungsteil 50 ist der Seilführungskörper 48 in Längsrichtung des zweiten Gehäuseteils 30 und damit in Axialrichtung der Kreuzspindel 40 verschiebbar angeordnet. In dem Seilaufnahmeteil 52 ist eine Öffnung 54 vorgesehen, durch welche das Seil 18 verläuft.

Das Führungsteil 50 des Seilführungskörpers 48 weist eine Führungsbuchse 56 und einen Mitnehmer 58 auf. Die Führungsbuchse 56 ist gleitbeweglich an einer Schiene 60 geführt. Der Mitnehmer 58 greift in das Gewinde der Kreuzspindel 40 hinein. In einem Führungsschlitz 62 des zweiten Gehäuseteils 30 verlaufen zwei an dem Führungsteil 50 befestigte Kugellager 64 und 66. Handelsübliche Dichtungsprofile 68 und 70 sind in Ausnehmungen in dem zweiten Gehäuseteil 30 vorgesehen. Durch diese Dichtungsprofile 68 und 70 wird das Gehäuseteil 30 abgedichtet.

In dem Seilaufnahmeteil 52 sind Führungsrollen 72 um die Öffnung 54 herum angeordnet. In dem dargestellten Ausführungsbeispiel sind vier solche Führungsrollen 72 vorgesehen.

Die beschriebene Zwangsführung und der beschriebene Seillängengeber arbeiten wie folgt zusammen:

Das Seil 18 läuft von der Seiltrommel 12 durch die Öffnung 54 des Seilführungskörpers 48 und wird dort durch die Führungsrollen 72 definiert geführt. Wenn das Seil 18 auf die Seiltrommel 12 aufgerollt oder von der Seiltrommel 12 abgerollt wird, dreht sich die Seiltrommelwelle 14. Über die Zahnräder 38 und 34 und den Antriebsriemen 36 wird dadurch auch die Kreuzspindel 40 in Drehung versetzt. Wenn die Kreuzspindel 40 sich dreht, verschiebt sich der Mitnehmer 58 längs der Kreuzspindel 40 in Axialrichtung. Durch die in dem Führungsschlitz 62 verlaufenden Kugellager 64 und 66 ist dabei der Seilführungskörper 48 gegen Drehung gesichert. Die Steigung der Gewinde der Kreuzspindel 40 sowie die Übersetzung der Bewegung zwischen Seiltrommelwelle 14 und Kreuzspindel 40 ist so gewählt, daß die Bewegung des Seilführungskörpers 48 in Axialrichtung der Kreuzspindel 40 in der Weise erfolgt, daß die Öffnung 54 immer genau der Stelle der Seiltrommel 12 gegenüberliegt, an welcher das Seil 18 die Seiltrommel 12 verläßt bzw. auf die Seiltrommel 12 aufgewickelt wird. Durch die charakteristische Ausbildung von zwei entgegengesetzt verlaufenden Gewinden einer Kreuzspindel dreht sich die Bewegungsrichtung des Seilführungskörpers an definierten Enden der Kreuzspindel 40 um. Dadurch kann das Seil 18 definiert in mehreren Lagen auf die Seiltrommel 12 aufgewickelt werden.

Wie aus Fig. 1 erkennbar, bildet die beschriebene Zwangsführung eine von dem restlichen Seillängengeber unabhängige Einheit, so daß Seillängengeber beispielsweise nachträglich mit dieser Einheit nachgerüstet werden können.

## Patentansprüche

1. Zwangsführung bei einem Seillängengeber mit einem auf eine Seiltrommel (12) aufwickelbares Seil (18), wobei
(a) die Seiltrommel (12)
(a₁) eine Seiltrommelwelle (14) aufweist, sowie
(a₂) einen um die Achse der Seiltrommelwelle (14) drehbare Seilaufnahmeteil (16), auf welchen das Seil (18) aufwickelbar ist, und
(b) die Zwangsführung
(b₁) einen Seilführungskörper (48) aufweist, welcher in Abhängigkeit von der Drehung der Seiltrommel (12) parallel zur Axialrichtung der Seiltrommelwelle (14) bewegbar ist, sowie
(b₂) Übertragungsmittel (32, 34, 36, 40, 58) zum Umsetzen der Drehbewegung der Seiltrommel (12) in eine Linearbewegung des Seilführungskörpers (48),
**dadurch gekennzeichnet, daß**
(c) der Seilführungskörper (48) an einem mit dem Gehäuse (10) des Seillängengebers verbindbaren Träger (28,30) vorgesehen ist, und
(d) die Übertragungsmittel
(d₁) ein mit der Seiltrommelwelle (14) verbindbares, erstes Zahnrad (38) aufweist, sowie
(d₂) ein in dem Träger (28,30) zum Zusammenwirken mit dem ersten Zahnrad (38) vorgesehenes, zweites Zahnrad (34),
(d₃) eine mit dem Seilführungskörper (48) in Wirkverbindung stehende Spindel (40), sowie
(d₄) einen zwischen dem zweiten Zahnrad (34) und der Spindel (40) wirkenden Zahnriemenantrieb (32).

2. Zwangsführung nach Anspruch 1, **dadurch gekennzeichnet, daß** die Spindel eine Kreuzspindel (40) ist.

3. Zwangsführung nach Anspruch 1 oder 2, **dadurch gekennzeichnet, daß** der Träger (28.30) lösbar mit dem Gehäuse (10) des Seillängengebers verbindbar ist.

4. Zwangsführung nach einem der Ansprüche 1-3, **dadurch gekennzeichnet, daß** der Träger ein Gehäuse (28, 30) aufweist.

5. Zwangsführung nach Anspruch 4, **dadurch gekennzeichnet, daß** die Übertragungsmittel (32, 34, 36, 40, 58) zumindest teilweise in dem Gehäuse (28, 30) vorgesehen sind.

## Claims

1. Restricted guidance in a cable length transmitter, comprising a cable (18) arranged to be wound up on a cable drum (12), wherein
(a) the cable drum (12)
(a₁) has a cable drum shaft (14) and
(a₂) a cable accommodation element (16) on which the cable (18) is wound up, and
(b) the restricted guidance
(b₁) comprises a cable guiding body (48), which is movable parallel to the axial direction of the cable drum shaft (14) depending on the rotation of the cable drum (12), and
(b₂) transmission means (32,34,36,40,58) for converting the rotary movement of the cable drum (12) into a linear movement of the cable guiding body (48),
**characterised in that**
(c) the cable guiding body (48) is provided on a support (28,30) adapted to be attached to the housing (10) of the cable lenth transmitter, and
(d) the transmission means
(d₁) have a first gear (38) connected to the cable drum shaft (14) and
(d₂) a second gear (34) provided in the support (28,30) for cooperating with the first gear (38),
(d₃) a spindle (40) operatively connected with the cable guiding body (48) and
(d₄) a toothed belt drive (32) acting between the second gear (34) and the spindle (40).

2. Restricted guidance according to claim 1, **characterised in that** the spindle is a cross spindle.

3. Restricted guidance according to claims 1 or 2, **characterised in that** the support (28,30) is detachably connected to the housing (10) of the cable length transmitter.

4. Restricted guidance according to any one of the claims 1 to 3, **characterised in that** the support has a housing (28,30)

5. Restricted guidance according to claim 4, **characterised in that** the transmission means (32,34m36,40,58) at least partially are provided in the housing (28,30).

## Revendications

1. Guidage forcé pour un transmetteur de longueur de câble muni d'un câble (18) pouvant être enroulé sur un tambour de câble (12),
(a) le tambour de câble (12) présentant
(a₁) un arbre de tambour de câble (14) ainsi que
(a₂) un élément logeant le câble (16) pouvant tourner autour de l'axe de l'arbre de tambour de câble (14) sur lequel le câble (18) peut être enroulé, et
(b) le guidage forcé présentant
(b₁) un élément de guidage de câble (48) qui peut se déplacer en fonction de la rotation du tambour de câble (12) parallèlement au sens axial de l'arbre du tambour de câble (14), ainsi que
(b₂) des moyens de transmission (32,34,36,40,58) destinés à convertir le déplacement rotatif du tambour de câble (12) en déplacement linéaire de l'élément de guidage de câble (48),
**caractérisé en ce que**
(c) l'élément de guidage de câble (48) est prévu sur un support (28,30) pouvant être relié au boîtier (10) du transmetteur de longueur de câble, et
(d) les moyens de transmission présentent
(d₁) une première roue dentée (38) pouvant être reliée à l'arbre du tambour de câble (14),
(d₂) une seconde roue dentée (34) prévue dans le support (28,30) afin de concourir avec la première roue dentée (38),
(d₃) une broche (40) concourant avec l'élément de guidage de câble (48), ainsi que
(d₄) une transmission à courroie dentée (32) agissant entre la seconde roue dentée (34) et la broche (40).

2. Guidage forcé selon la revendication 1, **caractérisé en ce que** la broche est une broche en croix (40).

3. Guidage forcé selon la revendication 1 ou 2, **caractérisé en ce que** le support (28,30) peut être relié au boîtier (10) du transmetteur de longueur de câble de façon amovible.

4. Guidage forcé selon l'une quelconque des revendications 1-3, **caractérisé en ce que** le support présente un boîtier (28,30).

5. Guidage forcé selon la revendication 4, **caractérisé en ce que** les moyens de transmission (32,34,36,40,58) sont prévus au moins en partie dans le boîtier (28,30).
